# DEMANDE DE BREVET EUROPEEN

(11) **EP 1 260 813 A1**
(43) Date de publication de la demande: **27.11.2002**
(21) Numéro de dépôt: 01810525.4
(22) Date de dépôt: 31.05.2001
(51) Int. Cl.: G01N 27/403, G01N 27/44, G01N 33/18

(54) **Système d'électrodes pour capteur électrochimique**

(30) Priorité: 22.05.2001 CH 20010950
(71) Demandeur: CSEM Centre Suisse d'Electronique et de Microtechnique SA, 2007 Neuchâtel (CH)
(72) Inventeur: Gobet, Jean, 2035 Corcelles (CH); Rychen, Philippe, 68640 Muespach-le-Haut (FR)
(74) Mandataire: Gresset, Jean

(57) **Abrégé**

L'invention se rapporte à un système d'électrodes pour capteur électrochimique.

Le système d'électrodes comprend, disposées sur un substrat conducteur (10), une pluralité de micro-disques (22) électriquement connectés au substrat et une électrode génératrice (20) isolée du substrat par une couche isolante (14) et présentant une pluralité d'ouvertures (24) concentriques avec lesdits micro-disques. Une couche conductrique (12) et des connexions (26, 28) permettent la connexion des électrodes à des sources d'énergie. L'électrode génératrice permet de modifier localement, au niveau des micro-disques, les concentrations d'espèces présentes en solution en regard desdites électrodes.

## Description

La présente invention se rapporte aux capteurs électrochimiques destinés à mesurer la concentration d'une substance chimique dans un liquide. De tels dispositifs trouvent une application particulièrement intéressante, mais non exclusive, à la détection des niveaux de chlore dans l'eau potable ou l'eau des piscines.

Les capteurs électrochimiques de ce type comportent nécessairement une électrode de mesure, une électrode de référence et une contre-électrode. On connaît également un autre type de tels capteurs qui comportent, en outre, une électrode dite génératrice et sa contre-électrode. L'ajout de ces deux dernières électrodes, dont l'effet est de créer des modifications de concentration d'espèces présentes en solution, permet de contrôler localement l'environnement de l'électrode de mesure. Par exemple, le pH de la solution peut être modifié localement par l'application d'un courant à l'électrode génératrice. Un courant cathodique entraînera la production de ions OH- (le pH devenant alors plus basique) et, inversement, un courant anodique entraînera la production de ions H+ (le pH devenant alors plus acide). Une contre-électrode associée à l'électrode génératrice, une contre-électrode associée à l'électrode de mesure (ou de travail) et une électrode de référence sont nécessaires à la réalisation d'un capteur complet. Ces dernières électrodes, dont les dimensions n'ont pas besoin d'être microscopiques, sont bien connues dans le domaine considéré et peuvent être montées séparément. Le document US 5 597 463 décrit, par exemple, un capteur de ce second type, destiné à effectuer un titrage et avec lequel la mesure effectuée est de type potentiostatique.

On comprendra aisément qu'il est particulièrement avantageux d'utiliser, comme électrode de mesure, des électrodes de très petites dimensions, non seulement parce que cela permet de réduire l'espace entre l'électrode de mesure et l'électrode génératrice, mais aussi parce que les effets de la turbulence du liquide dans la cellule s'en trouvent minimisés.

Le document GB 2 290 617 propose une structure à micro-électrodes dans laquelle l'électrode de mesure et l'électrode génératrice se présentent sous la forme de deux peignes dont les doigts sont interdigités. Pour l'un des peignes au moins, les doigts ont une largeur qui est inférieure à 25 µm alors que leur longueur est 20 fois, ou plus, supérieure à la largeur. Typiquement, ces doigts ont une longueur de quelques millimètres et une largeur de 20 µm, l'espace entre deux doigts adjacents des deux peignes pouvant être de 20 µm.

La présente invention a pour but de fournir un système d'électrodes dans lequel l'électrode de mesure et l'électrode génératrice possèdent aussi des micro-structures mais dont, par rapport aux réalisations existantes, l'efficacité est améliorée et le coût de production réduit.

De façon plus précise, afin d'atteindre ce but, l'invention concerne un système d'électrodes pour une cellule électrochimique, du type comportant un substrat et, disposées sur lui et proches l'une de l'autre, une électrode de mesure et une électrode génératrice. Ce système est caractérisé en ce que:
- l'électrode de mesure est formée d'une pluralité de micro-disques électriquement conducteurs régulièrement répartis sur le substrat et réunis électriquement entre eux; et
- l'électrode génératrice est formée d'une plaque électriquement conductrice percée d'ouvertures circulaires de diamètre supérieur à celui des micro-disques et disposée de manière à ce que chaque ouverture soit concentrique à un micro-disque.

De manière avantageuse, les micro-disques ont un diamètre d'environ 5 à 20 µm et sont espacés les uns des autres d'environ 100 à 400 µm, alors que les ouvertures ont un diamètre supérieur d'environ 10 à 100 µm au diamètre des micro-disques.

Selon un premier mode de réalisation préféré:
- le substrat est électriquement conducteur;
- une couche électriquement isolante est déposée sur le substrat et percée d'une pluralité d'ouvertures circulaires;
- les micro-disques formant l'électrode de mesure sont constitués par une couche conductrice déposée dans ces ouvertures au contact du substrat; et
- l'électrode génératrice est constituée par une couche conductrice déposée sur la couche isolante.

Dans cette première réalisation, le substrat est, avantageusement, en silicium rendu conducteur par dopage et une couche électriquement conductrice est déposée sous lui.

Selon un deuxième mode de réalisation préféré:
- l'électrode de mesure est constituée par une couche conductrice déposée sur le substrat;
- une couche électriquement isolante est déposée sur la couche conductrice et percée d'une pluralité d'ouvertures circulaires délimitant les micro-disques de l'électrode de mesure; et
- l'électrode génératrice est constituée par une couche conductrice déposée sur la couche isolante.

Dans cette deuxième réalisation, le substrat peut être indifféremment soit en verre ou en quartz, soit en silicium recouvert d'une couche isolante, soit en silicium rendu conducteur par dopage avec, alors, une couche électriquement conductrice déposée sous lui.

Un autre but de la présente invention est de fournir une méthode de détermination du pH d'une eau chlorée à l'aide du capteur ayant les caractéristiques précitées.

D'autres caractéristiques de l'invention ressortiront de la description qui va suivre, faite en regard du dessin annexé, sur lequel:
- la figure 1 est une vue en plan d'un système à micro-électrodes selon l'invention;
- la figure 2 est une vue partielle en coupe à grande échelle d'une première forme de réalisation du système de la figure 1;
- la figure 3 est un schéma montrant l'effet procuré par une telle structure d'électrodes;
- la figure 4 est une vue partielle en coupe à grande échelle d'une deuxième forme de réalisation du système de la figure 1 ; et
- la figure 5 montre la variation des espèces chlorées dans l'eau en fonction de la valeur de son pH.

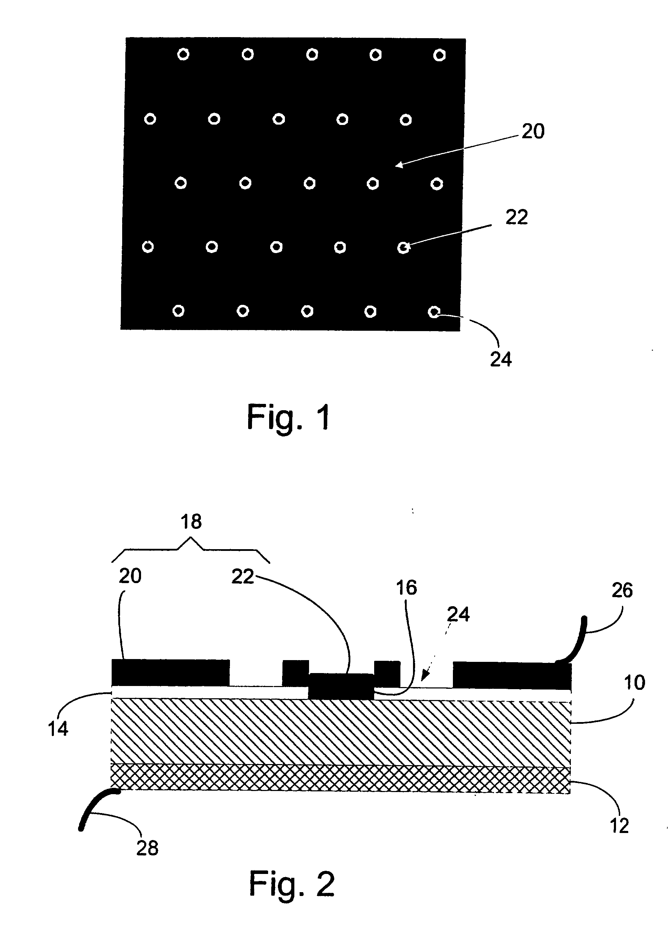

On se référera, tout d'abord, aux figures 1 et 2, sur lesquelles on a montré en 10 un substrat électriquement conducteur qui se présente sous la forme d'une plaque carrée de, typiquement, 2 à 10 mm de côté et 0.5 mm d'épaisseur. Cette plaque est, avantageusement, réalisée en silicium rendu conducteur par dopage selon des techniques bien connues de l'homme de métier.

La face inférieure du substrat 10 est recouverte d'une couche conductrice 12 réalisée, par exemple, en titane ou en aluminium ou formée d'un empilement de trois sous-couches de titane, platine et or. L'épaisseur de cette couche, déposée selon tout procédé de métallisation connu, est d'environ 0.2 à 0.3 µm.

En variante, le substrat 10 peut être une simple plaque métallique. Dans ce cas, la couche conductrice 12 est supprimée.

La face supérieure du substrat 10 est recouverte d'une couche isolante 14 formée, par exemple, d'un empilement de deux sous-couches de Si0₂ et Si₃N₄ connu pour présenter une excellente stabilité en milieu aqueux. L'épaisseur de cette couche est d'environ 0.1 à 0.2 µm.

La couche isolante 14 est percée, par exemple par gravage dans un plasma fluoré, d'un réseau régulier d'ouvertures traversantes circulaires 16 ayant, typiquement, un diamètre d'environ 2 à 20 µm et espacées les unes des autres d'environ 100 à 400 µm. Dans l'exemple représenté à la figure 1, l'espacement est de 300 µm.

La face supérieure de la couche isolante 14, ainsi que les ouvertures 16 pratiquées dans celle-ci, sont recouvertes d'une couche conductrice 18 portant la référence 20 lorsqu'elle est sur la couche 14 et la référence 22 lorsqu'elle forme un micro-disque reposant dans l'une des ouvertures circulaires 16. Cette couche 18 est formée, par exemple, d'un empilement d'une couche d'adhérence, d'une couche barrière de diffusion et d'une couche du matériau d'électrode souhaité. Cet empilement, par exemple de titane, de platine et d'or est déposé en une seule fois, selon tout procédé de métallisation connu, et a une épaisseur unique d'environ 0.2 à 0.3 µm.

La couche 18 déposée sur la couche isolante 14 est percée, par gravage chimique, par gravage plasma ou selon le procédé dit de « lift-off », d'un réseau d'ouvertures annulaires 24 entourant chacune l'un des micro-disques 22 et ayant un diamètre extérieur d'environ 30 à 120 µm. L'espace annulaire ainsi dégagé autour des micro-disques a une largeur typique de 5 à 50 µm. On notera que le gravage de la couche 18 est fait de telle sorte que les micro-disques 22 aient un diamètre légèrement supérieur à celui des ouvertures 16 et cela, dans le but d'éviter tout contact de la solution à mesurer avec le substrat 10.

Ainsi est réalisée une microstructure pour capteur électrochimique, dans laquelle:
- la couche conductrice 20 constitue l'électrode génératrice qui peut être connectée directement à une source d'énergie par une liaison 26, et
- l'ensemble des micro-disques conducteurs 22 constituent l'électrode de mesure qui peut être connectée à la souce d'énergie au travers du substrat 10 et de la couche 12, tous deux conducteurs, par une liaison 28 reliée à cette dernière.

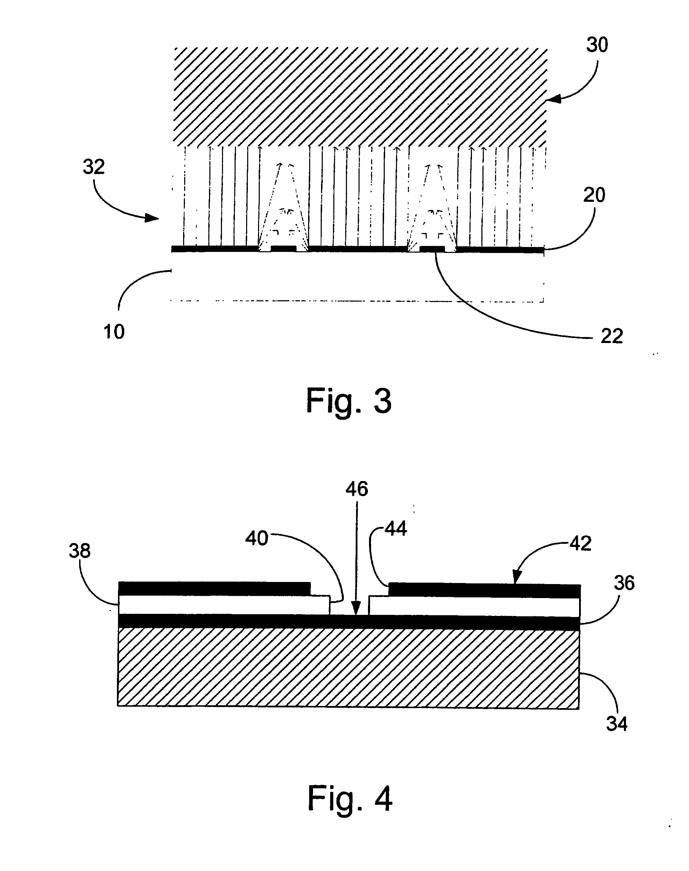

Comme déjà mentionné, l'électrode génératrice 20 a pour effet de créer, à son voisinage, des ions H⁺ ou OH⁻ selon les polarisations appliquées. La figure 3 montre, de manière schématique, que cette électrode établit, dans le liquide 30 où la structure selon l'invention est plongée, une zone de diffusion 32 ayant, typiquement, une épaisseur de 50 à 500 µm selon les conditions hydrodynamiques, et dans laquelle les ions créés présentent un gradient de concentration. L'environnement de l'électrode de mesure 22 pourra ainsi être modifié (augmentation ou diminution du pH) de manière à être optimal pour l'analyse de l'espèce détectée. Ces ions réagissent alors avec les substances recherchées dans le liquide et les modifications résultantes de la concentration ionique sont détectées grâce à l'ensemble des micro-disques 22 formant l'électrode de mesure.

Les avantages de la structure qui vient d'être décrite par rapport à celle du document GB 2 290 617 (déjà mentionné) sont de deux types. Tout d'abord, les micro-disques, ayant deux dimensions (longueur et largeur) faibles par rapport à l'épaisseur de la couche de diffusion, sont des micro-électrodes au sens strict du terme. A l'inverse, les micro-lignes décrites dans le document précité ne possèdent qu'une seule dimension micrométrique; elles ne peuvent, donc, être considérées comme des micro-électrodes que vis-à-vis d'une seule direction du flux de la solution. La structure de l'invention présente, entre autres, les avantages suivants. En premier lieu, elle offre une meilleure indépendance vis-à-vis de la turbulence et de la direction du liquide dans la cellule de mesure et, en second lieu, elle présente une plus faible sensibilité à la conductivité du liquide et offre un meilleur rapport signal/bruit. Enfin, elle assure un espacement unique et parfaitement symétrique entre l'électrode de mesure et l'électrode génératrice. L'action de l'électrode génératrice est fortement améliorée du fait qu'elle a une surface plus importante que celle des micro-disques, qui constituent l'électrode de mesure, et qu'elle est située très près de ces derniers. De plus, la structure proposée est compatible avec les techniques de fabrication par lots et permet, selon l'une de ses variantes, la connexion électrique par la face arrière de l'électrode de mesure.

On se référera maintenant à la figure 4 qui représente une variante de réalisation de la structure précédemment décrite. Dans ce cas, le substrat conducteur 10 de la figure 2 est remplacé par un substrat isolant 34, par exemple, en verre ou en quartz.

La face supérieure du substrat 34 est recouverte d'une couche conductrice 36 qui, comme la couche 18, est réalisée, par exemple, en titane ou formée d'un empilement de trois sous-couches de titane, platine et or. Elle est déposée selon tout procédé de métallisation connu et a une épaisseur d'environ 0.2 à 0.3 µm.

La face supérieure de la couche conductrice 36 est recouverte d'une couche isolante 38 qui, comme la couche 14, est formée, par exemple, d'une couche de nitrure de silicium non stoechiométrique (SiNx) qui peut être déposée à l'aide d'un procédé à basse température (PECVD). L'épaisseur de cette couche est typiquement d'environ 0.1 à 0.2 µm. En vue d'obtenir une meilleure stabilité en milieu aqueux, un polymère organique photosensible, de type époxy ou polyimide, d'une épaisseur typique de 1 à 2µm peut également être utilisé en lieu et place du nitrure de silicium.

La couche isolante 38 est percée, par gravage chimique, d'un réseau régulier d'ouvertures traversantes circulaires 40 ayant, typiquement, comme les ouvertures 16, un diamètre d'environ 2 à 20 µm et espacés d'environ 300 µm.

La face supérieure de la couche isolante 38 est recouverte d'une couche conductrice 42 de même composition et de même épaisseur que la couche 36. Cette couche 42 est percée, par gravage chimique, d'un réseau d'ouvertures circulaires 44 entourant chacune l'une des ouvertures 40 de la couche 38. L'espace annulaire ainsi dégagé autour des ouvertures 40 est, typiquement, de 5 à 50 µm.

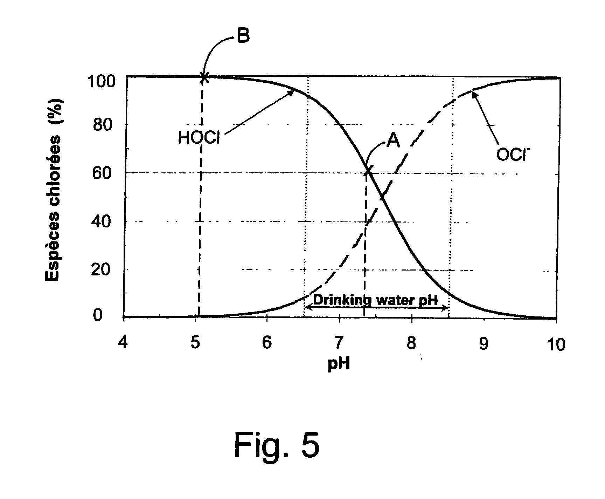

Ainsi est réalisée, selon cette variante, une microstructure pour capteur électrochimique, dans laquelle:
- la couche conductrice 42 constitue l'électrode génératrice qui peut être connectée directement à une source d'énergie par une liaison non représentée, et
- la couche conductrice 36 constitue l'électrode de mesure, active seulement par ses portions 46 découvertes par les ouvertures 40, qui peut être connectée directement à la source d'énergie par une liaison non représentée.
   La variante de réalisation de la figure 4 peut, elle-même, donner lieu à une première variante dans laquelle le substrat 34 est formé d'une plaque de silicium non spécialement dopé recouverte d'une couche isolante et à une deuxième variante dans laquelle le substrat est formé, comme dans la figure 2, d'une plaque de silicium fortement dopé dont la face arrière est recouverte d'une couche conductrice permettant la connexion.
   On se référera maintenant à la figure 5 pour décrire une application avantageuse d'un capteur pourvu d'une électrode génératrice selon la présente invention. Comme déjà mentionné, le chlore est largement utilisé pour la désinfection de l'eau des piscines ou des circuits de distribution en eau potable. Or, le chlore ajouté dans l'eau se trouve sous la forme d'acide hypochloreux (HOCI) ou sous la forme d'hypochlorite (OCI⁻), leurs concentrations respectives dépendant de la valeur du pH, comme l'indiquent les courbes de la figure 5.
   On peut voir, sur cette figure 5, que la variation de la concentration d'acide hypochloreux est maximale lorsque le pH varie entre 6,5 et 8,5, alors que cette même variation est très faible lorsque le pH est, soit inférieur à 6, soit supérieur à 9. Ainsi, dans le cadre d'une application du capteur précédemment décrit dans de l'eau potable ou de l'eau de piscine comprenant du chlore, il est possible de mesurer la valeur du pH de cette eau en procédant de la façon suivante.
   L'électrode génératrice étant inactive, on mesure d'abord la concentration A d'acide hypochloreux. Ensuite, on active l'électrode génératrice de manière à modifier, localement au niveau des micro-disques, la solution en la rendant plus acide (pH < 5,5) et on mesure la concentration B d'acide hypochloreux. Le pH de la solution est alors déterminé par la valeur du rapport A/B. Afin que cette détermination soit aussi exacte que possible, il conviendra, toutefois, de prendre les précautions suivantes. Le matériau constituant l'électrode de mesure devra être très sensible à l'acide hypochloreux et très peu sensible à l'hypochlorite. Un matériau, tel le carbone, peut, à cet égard, être considéré comme satisfaisant. L'utilisation d'une membrane anionique, par exemple en un matériau commercialisé sous le nom de Nafion, qui ne laisse pas passer les anions (tels les anions OCI⁻) permet de garantir que seul l'acide hypochloreux sera pris en compte. Enfin, le pH d'une solution variant avec sa température, on s'assurera que celle-ci est la même que celle pour laquelle le capteur utilisé a été calibré.

## Revendications

1. Système d'électrodes pour une cellule électrochimique, comportant un substrat (10, 34) et, disposées sur lui et proches l'une de l'autre, une électrode de mesure et une électrode génératrice, **caractérisé en ce que**:
- l'électrode de mesure est formée d'une pluralité de micro-disques électriquement conducteurs (22, 46) régulièrement répartis sur le substrat et réunis électriquement entre eux; et
- l'électrode génératrice est formée d'une plaque électriquement conductrice (20, 42) percée d'ouvertures circulaires (24, 44) de diamètre supérieur à celui des micro-disques et disposée de manière à ce que chaque ouverture soit concentrique à un micro-disque.

2. Système selon la revendication 1, **caractérisé en ce que** les micro-disques (22, 46) ont un diamètre d'environ 2 à 20 µm et sont espacés les uns des autres d'environ 100 à 400 µm, et **en ce que** les ouvertures (24, 44) ont un diamètre d'environ 30 à 120 µm.

3. Système selon l'une des revendications 1 et 2, **caractérisé en ce que**:
- le substrat (10) est électriquement conducteur,
- il comporte une couche électriquement isolante (14) déposée sur le substrat et percée d'une pluralité d'ouvertures circulaires (16),
- les micro-disques formant l'électrode de mesure sont constitués par une couche conductrice (22) déposée dans lesdites ouvertures au contact du substrat, et
- l'électrode génératrice est constituée par une couche conductrice (20) déposée sur la couche isolante (14).

4. Système selon la revendication 3, **caractérisé en ce que** le substrat (10) est en silicium rendu conducteur par dopage.

5. Système selon la revendication 4, **caractérisé en ce qu'**il comporte une couche électriquement conductrice (12) déposée sous le substrat (10).

6. Système selon l'une des revendications 1 et 2, **caractérisé en ce que**:
- l'électrode de mesure est constituée par une couche conductrice (36) déposée sur le substrat (34),
- il comporte une couche électriquement isolante (38) déposée sur la couche conductrice (36) et percée d'une pluralité d'ouvertures circulaires (40) délimitant les micro-disques (46) de l'électrode de mesure, et
- l'électrode génératrice est constituée par une couche conductrice (42) déposée sur la couche isolante (38).

7. Système selon la revendication 6, **caractérisé en ce que** le substrat (34) est en verre ou en quartz.

8. Système selon la revendication 6, **caractérisé en ce que** le substrat (34) est formé d'une plaque de silicium recouverte d'une couche isolante.

9. Système selon la revendication 6, **caractérisé en ce que** le substrat (34) est en silicium rendu conducteur par dopage.

10. Système selon la revendication 9, **caractérisé en ce qu'**il comporte une couche électriquement conductrice déposée sous le substrat (34).

11. Méthode de détermination de la valeur de pH d'une eau chlorée à l'aide d'un capteur électrochimique pourvu d'un système d'électrodes selon l'une des revendications 1 à 10, **caractérisée en ce qu'**elle consiste à :
- mesurer une première concentration A d'acide hypochloreux lorsque l'électrode génératrice est inactive ;
- activer ladite électrode génératrice de façon à amener le pH de l'eau au niveau des micro-disques de l'électrode de mesure à un niveau d'acidité suffisant ;
- mesurer une seconde concentration B d'acide hypochloreux en milieu acide ; et
- déterminer la valeur de pH à partir du rapport de ladite première concentration à ladite seconde concentration.
